Europäisches Patentamt

European Patent Office

Office européen des brevets

(11) Publication number: **0 335 658**
**A2**

## (12) EUROPEAN PATENT APPLICATION

(21) Application number: **89303048.6**

(22) Date of filing: **28.03.89**

(51) Int. Cl.⁴: **B 65 G 47/06**
**B 23 Q 7/00, B 27 B 5/06**

(30) Priority: **31.03.88 GB 8807666**

(43) Date of publication of application:
**04.10.89 Bulletin 89/40**

(84) Designated Contracting States:
**AT BE CH DE ES FR GB GR IT LI LU NL SE**

(71) Applicant: **WADKIN PUBLIC LIMITED COMPANY**
**Green Lane Works Green Lane Road**
**Leicester, LE5 4PF (GB)**

(72) Inventor: **Hartley, William Riley**
**Thornlea Trawden**
**Colne Lancashire (GB)**

(74) Representative: **SERJEANTS**
**25, The Crescent King Street**
**Leicester, LE1 6RX (GB)**

(54) Fixture pallet changing apparatus.

(57) The apparatus comprises a store (10) for a number of fixture pallets at different levels. A transfer device (20) receives a pallet (40) at any of the levels. A chain moves a pallet (40) from the store (10) onto the transfer device (20) at the level of the pallet (40). A chain (30) moves the transfer device (20) to the level of a table of a machining centre. The chain loads the pallet from the transfer device (20) onto the table. The pallet to be loaded is selected according to the component(s) to be machined.

FIG.1

EP 0 335 658 A2

Bundesdruckerei Berlin

## Description

### Fixture Pallet Changing Apparatus

#### Technical Field

The invention relates to apparatus for changing fixture pallets in a machining centre for workpieces of wood, non-ferrous metals, plastics and composite materials. Such a machining centre may be used in the manufacture of components for furniture, aircraft or computers, for example.

#### Background Art

The setting up of a fixture pallet for the machining of a batch of components comprises locating clamps in positions determined by the shape of the components. Vacuum, mechanical or other clamps, guide blocks and hold-down lugs have to be situated so as not to interfere with the machining of the components. That is to say the cutter performing the machining should not strike a clamp or the like, or cut through the workpiece in a place where this would release the vacuum. The location of the clamps is different for each batch of components, and takes a considerable amount of cycle time on the machine, particularly if the number of individual components required from each batch is small. This is costly as machining cannot be performed while setting-up is going on.

#### The Invention

Apparatus according to the invention comprises a store for a number of fixture pallets at different levels, a transfer device for receiving a pallet at any of the levels, means for moving a pallet from the store onto the transfer device at the level of the pallet, means for moving the transfer device to the level of a table of a machining centre, means for loading the pallet from the transfer device onto the table, and means for selecting the pallet to be loaded according to the component(s) to be machined.

The store may comprise a trolley or stand with a number of open shelves or racks at different levels, each for receiving a fixture pallet. The fixture pallets may initially be loaded into position in the store by an operative who notes the location in a memory of a computer control of the machining centre.

The pallet is normally made from plywood, and specially prepared with through-holes etc. to suit particular component(s). The bottom face is preferably provided with grooves to coincide with keys on the transfer device and machining table. The pallet is also preferably provided with a chain dog hook at each end to assist in its movement.

The machining table generally has a vacuum panel, which may be of polyethylene, permanently fixed to it to provide the means for locating and vacuum clamping by means of through-holes. The panel may have a matrix of grooves cut in an upper surface, and be provided with rubber clamping strips which can be fitted in selected grooves to confine the vacuum to an area roughly corresponding to the component(s) to be machined. Through-holes outside this area should be blocked.

A number of pallets may be set up in advance, particularly for the machining of frequently required components, and loaded into the store. Thus time may be saved in setting up a workpiece on the machining table by moving a pallet already set up from the store to the table. After use, a pallet may be returned to store by the same series of steps performed in the opposite order.

The transfer device may comprise a platform, and means for locating the platform alongside the store at each pallet level, that is so as to form a continuation of the appropriate shelf of the store. The platform may be guided by rails up a side of the store, and moved by a chain pulled by a motor. Alternatively a scissor lift or other means may be provided

This means for moving the pallet from the store onto the transfer device, and from the transfer device onto the table, may each comprise a cam-driven hook, pneumatic cylinder and/or a drive chain, which may cooperate with guide blocks and/or rails for the correct location of the pallet.

The selecting means for the pallet should be part of the numerical control fof the machining centre. That is to say, when an operative takes the steps necessary for selecting the cutters and their locations for machining a particular component or components, a corresponding fixture pallet is also selected and moved to the machine table. Thus the control governs the means for moving the pallets and transfer device as well as the movement of the table on all axes during the machining operation.

Apparatus according to the invention may take a dual form for storing pallets to either side of a machining centre having a split work table, for example a gantry machine with multiple heads. Thus either half of the table may be machining while the other is undergoing a pallet change, with a consequent increase in productivity.

The invention is applicable to all concepts, table sizes and lay-outs of machining centre, and may provide for fixture pallets to be loaded onto the machining table from the front, rear or side.

#### Drawings

Figure 1 is an elevation of apparatus according to the invention;

Figure 2 is a section on A-A of Figure 1;

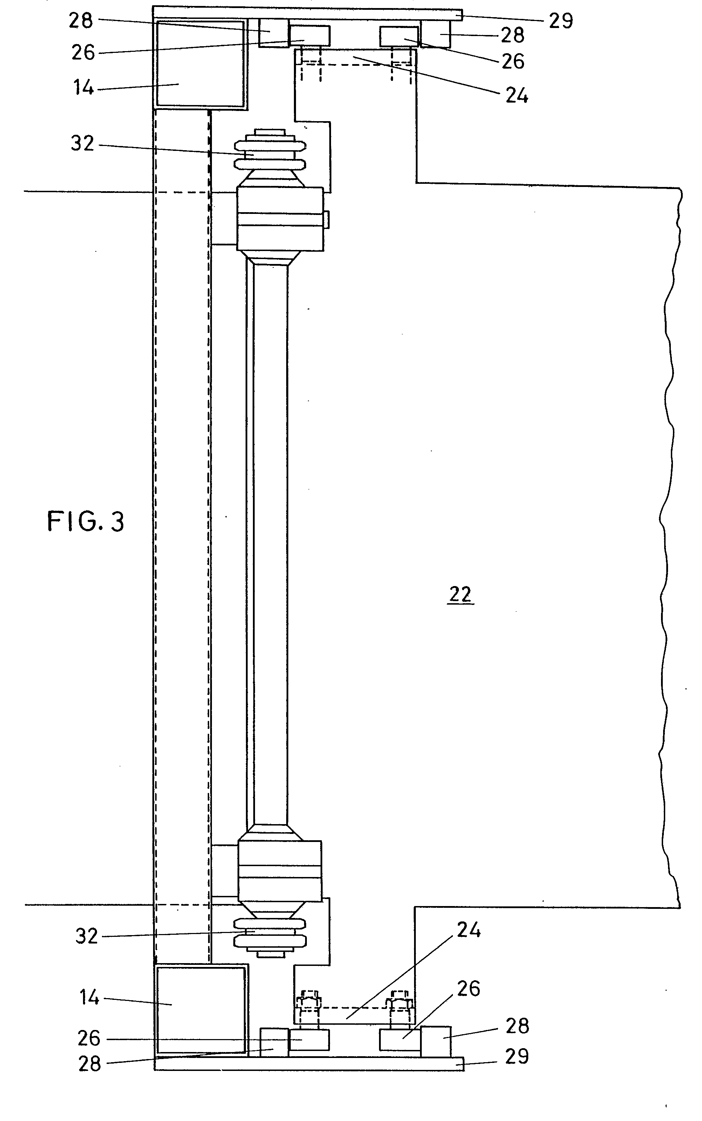

Figure 3 is a plan view in the direction of arrow B in Figure 1;

Figure 4 is a plan view illustrating a fixture pallet in position in a machining centre after movement from a transfer device; and

Figure 5 is a corresponding elevation.

#### Best Mode

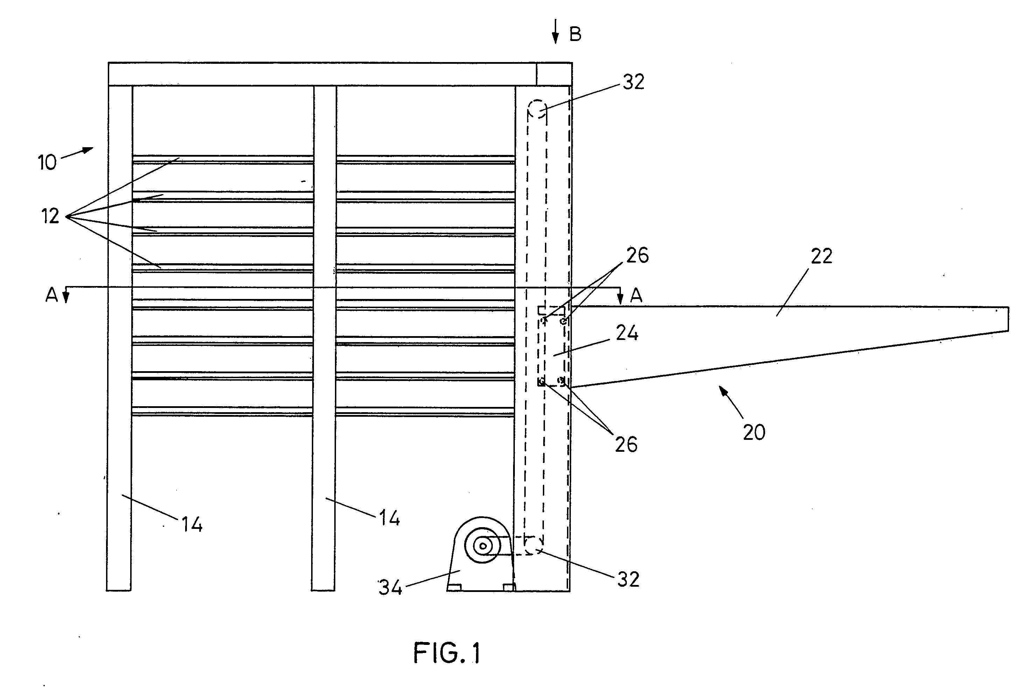

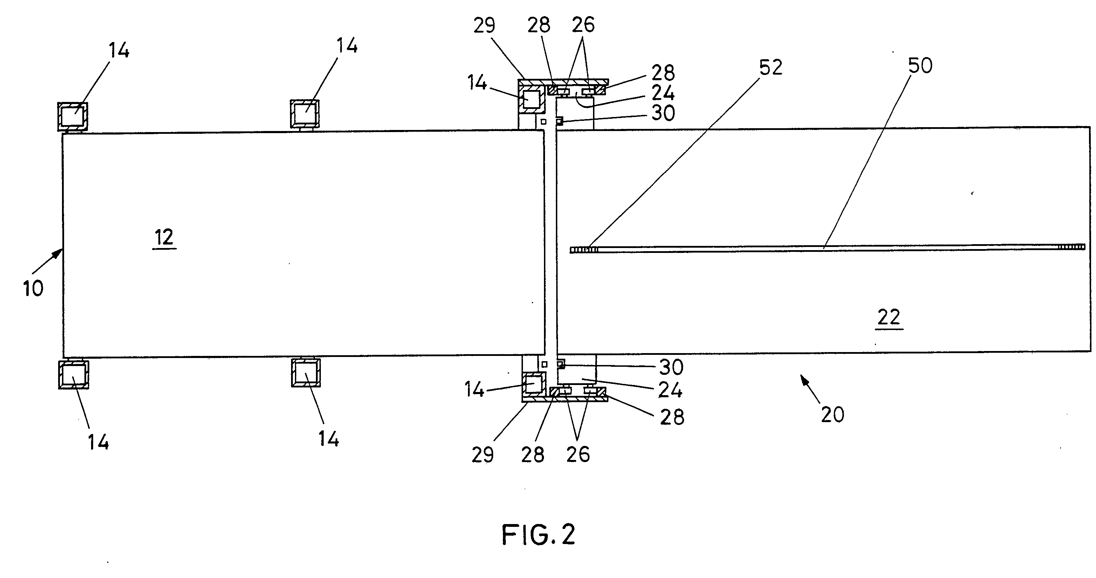

With particular reference to Figure 1, the apparatus comprises a store 10 which is made up of a number of open shelves 12 at different levels supported on legs 14. To the right of Figures 1 and 2, a transfer device 20 comprises a platform 22 having side plates 24 bearing rollers 26. The rollers are guided against rails 28 projecting from plates 29 secured to legs 14 for locating the platform 22 alongside the store 10. Thus the platform becomes a continuation of a shelf 12. The side plates 24 are each secured to a drive chain 30 which passes over sprockets 32 and is moved up and down by a motor 34.

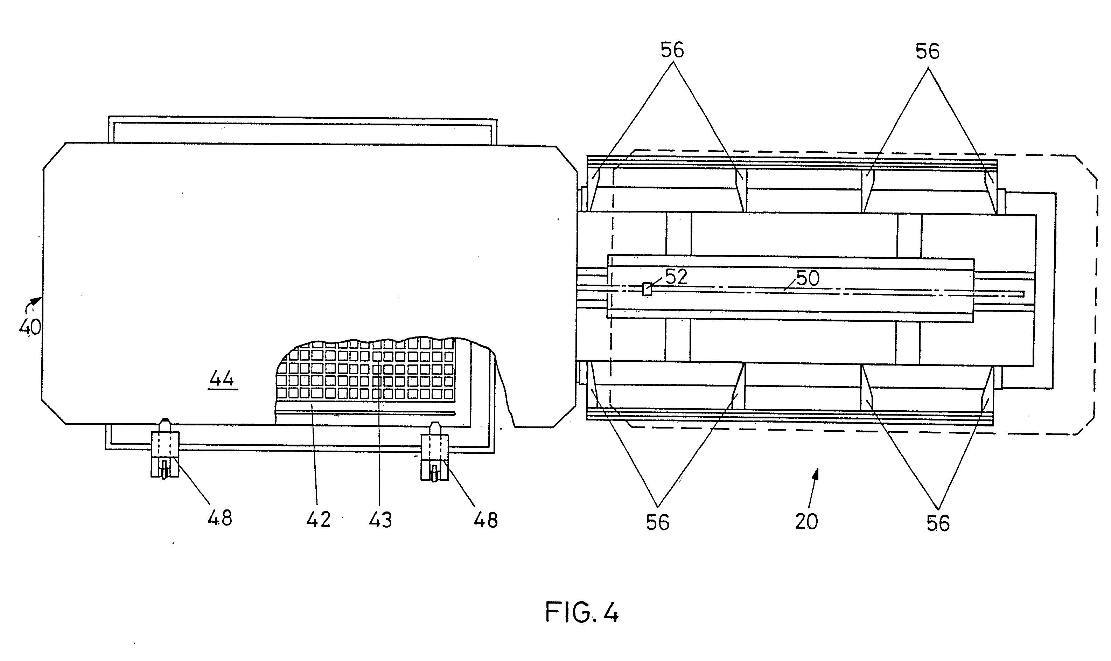

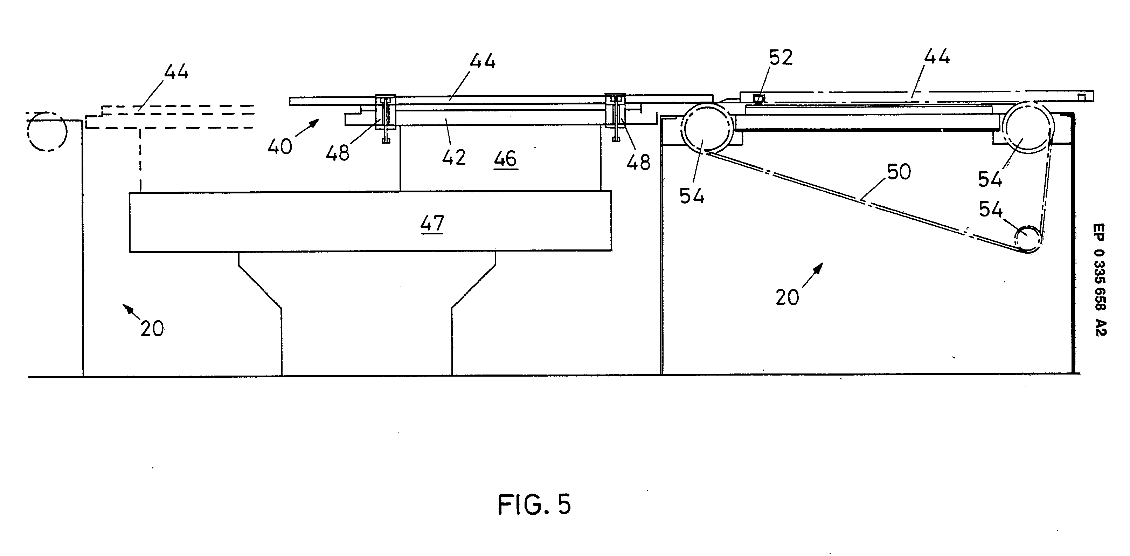

Turning now to Figure 4, a fixture pallet 40 comprises a sheet of plywood 44 which is located overe a vacuum panel 42 of polythene, and both are provided with through holes (not shown). The panel 42 has a matrix of grooves 43 for receiving rubber clamping strips in a configuration roughly corresponding to the area of the component to be machined. The holes through the panel 42 and sheet 44 for the transmission of vacuum are generally regularly spaced. They may be at corners of the matrix 43, and internally threaded for securing plugs to block off the vacuum from unwanted areas. The panel 42 is located on a table 46 of a machining centre 47 by lugs 48. To the left of Figure 5, there is an indication in broken lines as to how another fixture pallet 40 might be fed to the left side of the table 46 from another transfer device 20.

The transfer device 20 shown to the right of Figures 1 and 2, and in a slightly modified form to the right of Figures 4 and 5, comprises means for moving the pallet 40 from the store 10 and to the table 46. This moving means comprises a drive chain 50 carrying a dog 52 for engaging the pallet 40 and drivable in both directions over sprockets 54 by a motor (not shown). In Figures 1, 2 the transfer device 20 comprises a flat table, while in Figure 4 it comprises support fingers 56.

**Claims**

1. Apparatus for changing fixture pallets (40) in a machining centre (47) which comprises a store (10) for a number of fixture pallets (40) at different levels characterized by a transfer device (20) for receiving a pallet (40) at any of the levels, means (50) for moving a pallet (40) from the store (10) onto the transfer device (20) at the level of the pallet (40), means (30) for moving the transfer device (20) to the level of a table (46) of a machining centre, means for loading the pallet (40) from the transfer device (20) onto the table (46), and means for selecting the pallet to be loaded according to the component(s) to be machined.

2. Apparatus according to claim 1 in which the store (10) comprises a trolley or stand with a number of open shelves (12) or racks at different levels, each for receiving a fixture pallet (40).

3. Apparatus according to claim 1 or claim 2 in which the transfer device (20) comprises a platform (22), and means (30) for locating the platform (22) alongside the store (10) at each pallet level to form a continuation of the appropriate shelf (12) of the store (10).

4. Apparatus according to claim 3 in which the platform is guided by rails (28) up a side of the store (10), and moved by a chain (30) pulled by a motor (34).

5. Apparatus according to any preceding claim in which the means (50) for moving the pallet from the store (10) onto the transfer device (20), and from the transfer device (20) onto the table (46), each comprise a cam-driven hook, pneumatic cylinder and/or a drive chain (50), which cooperates with guide blocks and/or rails for the correct location of the pallet.

6. Apparatus according to any preceding claim which takes a dual form for storing pallets to either side of a machining centre.

FIG.1

EP 0 335 658 A2

FIG. 2

EP 0 335 658 A2

FIG. 3

FIG. 4

FIG. 5

EP 0 335 658 A2